# EUROPEAN PATENT APPLICATION

(11) **EP 4 574 335 A1**
(43) Date of publication of application: **25.06.2025**
(21) Application number: 23217870.7
(22) Date of filing: 19.12.2023
(51) Int. Cl.: B23Q 17/09, B23Q 17/12, B23Q 3/02

(54) **A CLAMPING SYSTEM FOR A MACHINE TOOL**

(71) Applicant: GF Machining Solutions AG, 2504 Biel/Bienne (CH)
(72) Inventor: Cooper, Gary, 2554 Meinisberg (CH); Shkoreti, Jozef, 2542 Pieterlen (CH); Flachsbart, Stephan, 3250 Lyss (CH)
(74) Representative: Li Schrag, Yue

(57) **Abstract**

The present invention is related to a clamping system for clamping a workpiece being machined by a machine tool. The clamping system comprises:
a. a pallet for holding the workpiece on the top surface of the pallet including a pallet locking mechanism and a pallet contacting surface, in particular the pallet contact surface is the bottom surface of the pallet;
b. a chuck for being mounted on a machine table of the machine tool including a chuck contacting surface and a chuck locking mechanism, wherein in the clamped state the pallet locking mechanism is engaged with the chuck locking mechanism and the pallet contacting surface is at least partially in contact with the chuck contacting surface, and wherein the chuck is provided with a recess (21) open on the chuck contacting surface, in particular the chuck contacting surface is the top surface of the chuck;
c. a sensor unit embedded in the recess of the chuck;
d. a preload mechanism which is configured to exert a force on the sensor unit such that a mechanical contact between the sensor unit and the pallet contacting surface is established, when the pallet is clamped with the chuck;
e. a communication unit configured to transmit the sensor data generated by the sensor unit to a control unit arranged at the outside of the clamping system, in particular the communication unit includes a wireless communication interface.

## Description

### FIELD OF THE INVENTION

The present invention is related to a clamping system for clamping a workpiece being machined by a machine tool.

### BACKGROUND OF INVENTION

Machining process monitoring is an important measure to ensure the quality of the machined part and to avoid damage of the machine tool. Therefore, more and more monitoring units are applied for monitoring the machining process. It is well-known that various sensors are integrated in the machine tool and the sensor data are analysed to determine the machining state, the quality of the machined part and the state of the machine tool.

EP3970913 is directed to a method for machining a structure on a workpiece by removing the material of the workpiece. The structure-born sound occurred during the machining process is detected by a sound sensor. The output signals of the sound sensor are used for controlling the infeed of a tool on the workpiece. The sound sensor is arranged on the machining tool.

US2023050576 discloses an AE-signal detecting device for an abrasive wheel. An AE sensor outputs an AE signal upon receipt of an elastic wave generated in an annular abrasive wheel. The sensor is sandwiched between a fixed flange fixed to a rotating shaft and a movable flange provided configured to move toward and away from the fixed flange.

However, arranging the sensors on the side of the machining tool has a drawback regarding the sensor signal quality. When the sensor is positioned close to the machining tool, the rotation of the spindle can cause distortion. The sensing quality can be negatively influenced. Therefore, an arrangement of the sensor on the side of the workpiece may overcome this drawback. For example, the sensors can be arranged in the machine table.

However, depending on the applications, the sensors should not be positioned too far away from the workpiece to obtain an optimal signal quality. For example, if the mechanical interaction between the machining tool and the workpiece must be monitored, it is important to position the sensors as close as possible to the area where the interaction takes place. Since the workpiece is in general mounted on a clamping system which is mounted on the machine table. Integrating the sensors into the clamping system allows the sensors positioned in the proximity of the interaction area between the machining tool and the workpiece.

### SUMMARY OF THE INVENTION

It is an objective of the present invention to provide a clamping system which allows to optimize the machining process monitoring. In particular, it is an objective of the present invention to provide a clamping system which allows to obtain sensor signal with optimum signal quality and easy handling.

According to the present invention, these objectives are achieved through the features of independent claims. In addition, further advantageous embodiments follow from the dependent claims and the description.

The present invention is related to a clamping system for clamping a workpiece being machined by a machine tool. The clamping system comprises a pallet for holding the workpiece on the top surface of the pallet and a chuck for being mounted on the machine table of the machine tool. The pallet includes a locking mechanism and a pallet contacting surface. In particular, the pallet contacting surface is the bottom surface of the pallet. The chuck includes a chuck contacting surface and a chuck clamping mechanism. In particular, the chuck contacting surface is the top surface of the chuck. In the clamped state the pallet locking mechanism is engaged with the chuck locking mechanism and the pallet contacting surface is at least partially in contact with the chuck contacting surface. Especially, the pallet contacting surface is maintained in contact with the chuck contacting surface by the clamping force generated by the engagement of the pallet locking mechanism and the chuck locking mechanism. The chuck is provided with a recess open on the chuck contacting surface. The clamping system further comprises a sensor unit, a preload mechanism and a communication unit. The sensor unit is embedded in the recess of the chuck. The preload mechanism is configured to exert a force on the sensor unit such that a mechanical contact between the sensor unit and the pallet contacting surface is established when the pallet is clamped with the chuck. The communication unit is configured to transmit the sensor data generated by the sensor unit to a control unit arranged at the outside of the clamping system. In particular, the communication unit includes a wireless communication interface.

In particular, the recess has a bottom surface, side walls and one opening which is on the chuck contact surface. This opening allows to establish a mechanical contact between the senor unit and the pallet contacting surface. When the sensor is packaged in a housing, the mechanical contact is established between the housing of the sensor unit and the pallet contacting surface. This direct mechanical contact enables to optimally sense the sensor signal. Embedding the sensor unit directly at the interface between the pallet and the chuck ensures a short distance between the sensor unit and the area where the machining occurs. Especially, if the structure-borne sound or the vibration generated by the interaction between the machining tool and the workpiece should be detected, it is important to position the sensor unit as close as possible to the interaction area.

Additionally, by clamping the pallet with the chuck, the preload mechanism automatically exerts the force on the sensor unit to push the sensor unit to the pallet contacting surface. A very tight contact between the sensor unit and the pallet contacting surface can be achieved. This tight contact is advantageous for optimally sensing the vibration occurred during the machining. The measurement can achieve a high accuracy.

Machining sufficiency is also a relevant factor for production. Thus, the clamping system should be suitable for being used with the automation systems, for example changing pallet by automatic pallet changer. Normally, the chuck is mounted on the machine table in the preparation phase and during the machining only the pallet holding the workpiece, or the machined part must be automatically changed. Arranging the sensor unit and the preload mechanism in the chuck make the automatic pallet handling possible.

In a preferred variant, the preload mechanism is configured to bring the sensor unit into contact with the pallet by exerting a preload.

Especially, the preload mechanism is configured that the sensor unit is automatically brought into contact with the pallet by clamping the pallet with the chuck. Namely, the sensor unit is brought into contact with the pallet contacting surface while the pallet is clamped with the chuck. By this way, the clamping of the pallet and the chuck and bring the sensor unit into contact with the pallet occur almost simultaneously. Thus, no additional idle time is required. The machining sufficiency is not influenced. Additionally, the sensor unit can be maintained at the contacting position as long as the pallet and the chuck remain in the clamped state. Consequently, the tight contact between the sensor unit and the pallet is maintained during the whole machining, since the pallet and the chuck must be kept as the clamped state during the machining process.

In one variant, the preload mechanism includes a spring element and is fixedly mounted on the inner bottom surface of the recess and the sensor unit sits on the spring element. For example, the recess has a U-shaped cross-section. The preload mechanism is mounted on the bottom surface of the recess. When the pallet is not clamped with the chuck, the spring element is released. The spring element is selected in a manner that the sensor unit protrudes out of the chuck contacting surface in the unclamped state. When the pallet is clamped with the chuck, the clamping force forcing the pallet locked into the chuck compresses the spring element downwardly. Consequently, a counter force exerts on the sensor unit to push it upwardly to achieve a tight contact with the pallet. Especially, the mechanical contact between the sensor unit and the pallet contacting surface is established at the same time as the clamping.

In order to provide a simple design, the preload mechanism includes only a spring element. The selection of the spring element depends on the type, size and the weight of the sensor unit. The height of the spring element in a non-compression state should large enough such that the sensor unit sitting thereon protrudes out of chuck contacting surface when the pallet is not clamped with the chuck.

In some embodiments, more than one sensor units are provided. In one variant, all the sensor units are arranged on the same spring element. In another variant, each sensor unit is arranged on an individual spring element.

This arrangement of the sensor unit can be easily implemented in any clamping system. The handling is simple. It can be used even with the automation system to automatically change the pallet. The contact between the sensor unit and the pallet is reliable. Since the contact between the sensor unit and the pallet is established by clamping the pallet with the chuck, no additional time is required.

In one variant, the preload mechanism is a preload element made of an elastic material which is compressible, in particular the preload element can be compressed in the vertical direction in a range of 0.1 mm to 4 mm, preferably in the range of 0.5 mm to 2 mm.

In particular, the preload element is an elastomer.

Preferably, the preload element is made of rubber and positioned on the lower inner surface of the recess and the sensor unit sits on the preload element.

Especially, the preload element is a ring-shaped element, for example an O-ring made of rubber. When the pallet is clamped with the chuck, the clamping force compresses the preload element such that the sensor unit gets into contact with the pallet. The ring shape has the advantage that cables connected to the sensor unit can go through the preload element. Using the O-ring as preload element provides a simple but reliable solution.

In another variant, the preload mechanism includes a fluid channel communicatively connected to the recess. The preload mechanism is configured to supply the pressurized fluid into the recess through the fluid channel to push the sensor unit pneumatically or hydraulically towards the pallet contact surface until the sensor unit gets into contact with the pallet contacting surface when the pallet is clamped to the chuck. In this variant, a hydraulic or pneumatic driving mechanism is applied to push the sensor unit towards the pallet. The fluid can be a liquid or air. Preferably, the recess has a hole on the bottom surface. The fluid channel is communicatively connected through this hole with the recess for supplying the fluid into the recess and push the sensor unit upwardly to the pallet.

In particular, a fluid inlet is arranged on the outer surface of the chuck and connected to the fluid channel of the pallet for receiving the fluid from outside of the chuck.

In an advantageous variant, the preload mechanism is configured to first move the sensor unit upwardly to a position protruding out of the chuck contacting surface before the pallet is clamped into the chuck. Then the pressure on the fluid or the air is released such that the pallet can push the senor units downwardly during the clamping. This means, the pallet is first in contact with the sensor unit and further pushes the sensor units slightly downwardly. When the pallet is clamped with the chuck, the pressure on the fluid or the air is activated again to maintain a tight contact between the sensor unit and the pallet contacting surface. In particular, a limiting element is provided to limit the downwards movement of the sensor unit.

Preferably, a sealing ring is arranged on the inner side surface of the recess and surrounds the sensor unit.

In a further variant, the preload mechanism comprises a magnetic element.

In particular, a permanent magnet is mounted on the top of the sensor unit and a metal element is arranged on the pallet contacting surface, wherein the permanent magnet is coupled with the metal element when the pallet is clamped with the chuck.

Alternatively, a permanent magnet is mounted on the pallet contacting surface and a metal element is mounted on the top of the sensor unit, wherein the permanent magnet is coupled with the metal element when the pallet is clamped with the chuck.

The cross-section of the recess can have various shapes, such as, round, square, rectangular.

In one variant, the sensor unit is an acoustic emission sensor. In particular, the clamping system is applied for a grinding process. In this application, the acoustic emission sensor can detect the noise generated by the grinding process and transmitted through the part clamping structure. The sensor data is helpful to monitor the process and identify the problems in an early stage. Moreover, a real-time monitoring is achieved since the sensor signal are collected during the machining. The collected signal can be analysed immediately to provide feedback regarding the machining process. If any anomalies are detected, measures can be immediately taken to prevent further damage.

In another variant, the sensor unit is an acceleration sensor to detect the vibration generated by the interaction of the machining tool and the workpiece.

In a preferred variant, the preload mechanism is positioned symmetrically along the central axial axis of the chuck.

Alternatively, the preload mechanism is positioned asymmetrically along the central axial axis of the chuck.

The communication unit is a wired or a wireless communication interface. The type of the communication interface depends on the structure of the machine table of the machine tool. For a five-axis machine tool, the wireless communication interface is preferred. For a three-axis machine tool, the wired communication interface is also applicable.

In order to improve the accuracy of the monitoring, more than one sensor units can be applied to sense the signals at the different positions. It is also possible to arrange different types of sensors at different positions to obtain different types of sensor data. For example, one acoustic emission sensor and one acceleration sensor are provided, several acoustic emission sensors and several acceleration sensors are provided and distributed next to each other but with a defined distance. The distance between the sensor units can be equal or non-equal. Thus, in a preferred variant, at least two preload mechanisms are provided. They can be positioned apart from each other or close to each other. On each preload mechanism one sensor unit is mounted. Alternatively, only one preload mechanism is provided to hold at least two sensor units.

The plurality of preload mechanisms can be arranged in one single recess or in several separate recesses depending on the type of the clamping system.

In some embodiments, a hole is provided on one side wall or on the inner lower surface of the recess for passing through the connecting lines required for the sensor unit.

The present invention is directed to an application of the clamping system of the present invention. The sensor data are collected during the machining and transmitted to a processing unit. The processing unit can be the arranged outside of the machine tool or in the machine tool. The collected sensor data are analysed by the processing unit to determine the machining quality.

### BRIEF DESCRIPTION OF THE DRAWINGS

In the following, a more particular description of the present invention is further described. The embodiments are described and explained with details with reference to accompanying drawings in which:
- Fig. 1: illustrates a sectional view of the first embodiment of a clamping system in a clamped state and mounted on a machine table of a 5-axis machine tool;
- Fig.2: illustrates a sectional view of the first embodiment of the chuck in an un-clamped state;
- Fig.3: illustrates an enlarged view of the part A shown in figure 1;
- Fig.4: illustrates a sectional view of the second embodiment of the clamping system in a clamped state and mounted on a machine table of a 5-axis machine tool;
- Fig.5: illustrates a sectional view of the second embodiment of the clamping system in a clamped state and mounted on a machine table of a 3-axis machine tool;
- Fig.6: illustrates a sectional view of the third embodiment of the clamping system;
- Fig.7: illustrates a sectional view of the fourth embodiment of the clamping system; and
- Fig.8: illustrates a sectional view of the fifth embodiment of the clamping system.

### EXEMPLARY EMBODIMENTS

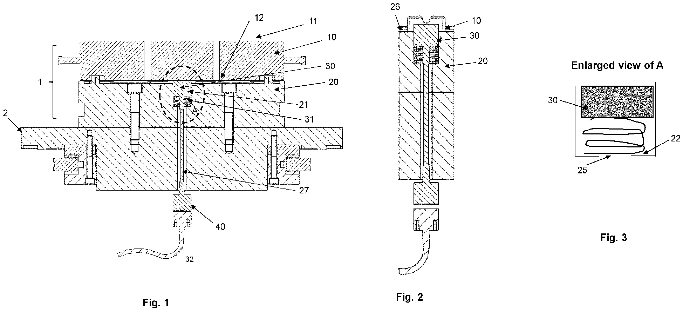

The figures 1 and 2 show sectional views of the first embodiment of a clamping system 1. It comprises a pallet 10 and a chuck 20. Figure 1 illustrates the clamped state, namely the pallet is clamped with the chuck, while the figure 2 illustrates the unclamped chuck, namely the pallet is not clamped with the chuck.

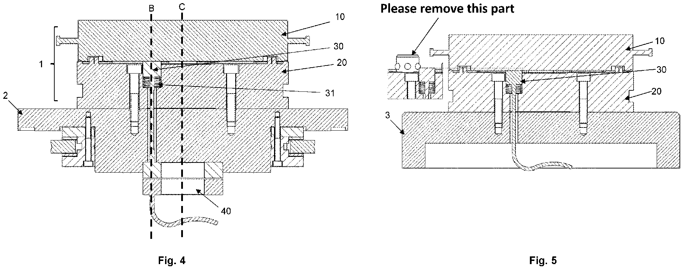

Figure 1 further depicts the situation when the clamping system is mounted on a machine table 2. In general, before machining the chuck is first mounted on the machine table. The pallet is prepared with the workpiece mounted thereon during the machining preparation phase. When the workpiece must be machined by the machine tool, the prepared pallet with the workpiece thereon is automatically picked up by an automation device and clamped into the chuck. The machine table 2 shown in figures 1 and 4 is a machine table of a 5-axis machine tool. However, the clamping system can also be applied for other machine tools having different machine table.

The pallet has a pallet clamping mechanism and referencing elements which are not shown in the figures. The chuck has a chuck clamping mechanism and referencing elements which are also not shown in the figures.

The pallet has a top surface 11 and a bottom surface 12. The workpiece is mounted on the top surface and the contacting surface is the bottom surface. The chuck has also a top surface and a bottom surface. The top surface of the chuck is the chuck contacting surface and the bottom surface of the chuck is in contact with the machine table.

A recess 21 is formed at the upper part of the chuck. The opening side of the recess is on the chuck contacting surface. Figure 3 shows an enlarged view of the recess and the arrangement of a sensor unit 30 therein. A spring element 31 is fixedly mounted on the inner lower surface of the recess 22. The sensor unit sits on the spring element. As depicted in the figure 2, in the unclamped state, the spring element is released such that the sensor unit protrudes out of the opening side of the recess and protrude over the chuck contacting surface 26. When the pallet is clamped with the chuck, the sensor unit and the spring element are pushed downwardly by the pallet such that the spring element is compressed, as the counterforce the spring element exerts a force upwards on the sensor unit to bring it into contact with the pallet contacting surface. This ensures a tight contact of the sensor unit with the pallet, which is essential to obtain an optimal measuring condition. A communication unit 40 is arranged at the outside of the chuck. On the inner lower surface of the recess a hole 25 is formed. Additionally, a guiding channel 27 is formed in the chuck. The hole is connected to the guiding channel for passing the connection lines connected to the sensor units. The position of the hole and the guiding channel can be formed at other positions. For example, the hole can also be formed on a side wall of the recess and the guiding channel can be formed with one open end at the bottom surface of the pallet and another open end connected to the hole.

Figures 1 and 2 illustrate the embodiment, in which the recess is symmetrically provided in the chuck. The central line of the recess in the axial direction is aligned with the central line of the chuck in the axial direction.

Figures 4 and 5 show another embodiment in which the recess is asymmetrically provided in the chuck. The central line of the recess in the axial direction denoted as B is apart from central line of the chuck in the axial direction denoted as C with a defined distance. Figure 5 shows the clamping system mounted in a machine table 3 of a 3-axis machine tool. The figure indicated with D in the figure 5 illustrates a partially view of the sensor unit and the spring element, especially the spring element is in a released state since no pallet is clamped with the chuck.

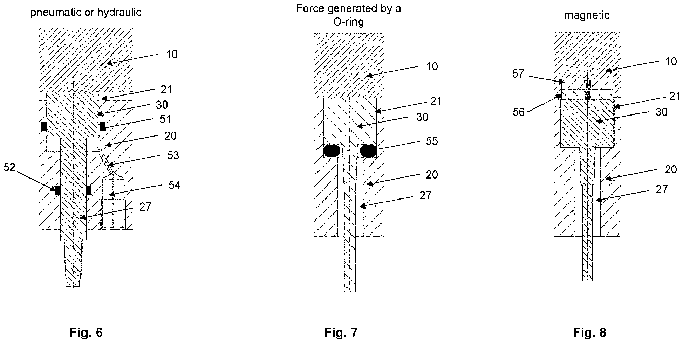

Figures 6, 7 and 8 show a third, fourth and fifth embodiments of the clamping systems, respectively.

The third embodiment shown in the figure 6 is based on a pneumatic or hydraulic principle. Besides the recess 21, a fluid channel 53 and a fluid chamber 54 are embedded in the chuck. When the fluid in the fluid chamber is pushed into the recess, the sensor unit is pushed by the fluid from the lower side upwardly to contact the pallet contacting surface. Additionally, a first sealing 51 is arranged in the recess around the sensor unit and a second sealing 52 is arranged in the guiding channel 27. The first sealing and the second sealing can also be mounted on the sensor unit. In particular, a limiting element 28 is provided under the chuck to limit the downward movement of the sensor unit.

The fourth embodiment shown in the figure 7 includes an O-ring 55 as an elastic element. The material of the O-ring is selected that it can be slightly compressed when the pallet is clamped with the chuck and released when the pallet is unclamped from the chuck.

The fifth embodiment shown in the figure 8 is based on the magnetic principle. On the top of the sensor unit a magnetic element 56 is mounted. As counter part a metal element 57 is mounted on the pallet contacting surface. When the pallet contacting surface approaches to the chuck, the magnetic element is attracted by the metal element caused by the magnetic force.

### LIST OF REFERENCES

- 1: clamping system
- 2: machine table of a 5-axis machine tool
- 3: machine table of a 3-axis machine tool
- 10: pallet
- 11: top surface of the pallet
- 12: bottom surface of the pallet
- 20: chuck
- 21: recess
- 22: inner lower surface of the recess
- 23: side wall of the recess
- 24: opening side of the recess
- 25: hole of the recess
- 26: chuck contacting surface
- 27: guiding channel
- 28: limiting element
- 30: sensor unit
- 31: spring element
- 40: communication unit
- 51: first sealing
- 52: second sealing
- 53: fluid channel
- 54: fluid chamber
- 55: O-ring
- 56: magnet element
- 57: metal element

## Claims

1. A clamping system (1) for clamping a workpiece being machined by a machine tool comprising:
a. a pallet (10) for holding the workpiece on the top surface of the pallet including a pallet locking mechanism and a pallet contacting surface, in particular the pallet contact surface is the bottom surface of the pallet;
b. a chuck (20) for being mounted on a machine table of the machine tool including a chuck contacting surface and a chuck locking mechanism, wherein in the clamped state the pallet locking mechanism is engaged with the chuck locking mechanism and the pallet contacting surface is at least partially in contact with the chuck contacting surface, and wherein the chuck is provided with a recess (21) open on the chuck contacting surface, in particular the chuck contacting surface is the top surface of the chuck;
c. a sensor unit (30) embedded in the recess of the chuck;
d. a preload mechanism (31) which is configured to exert a force on the sensor unit such that a mechanical contact between the sensor unit and the pallet contacting surface is established, when the pallet is clamped with the chuck;
e. a communication unit configured to transmit the sensor data generated by the sensor unit to a control unit arranged at the outside of the clamping system, in particular the communication unit includes a wireless communication interface.

2. The system according to claim 1, wherein the preload mechanism is a spring element and is fixedly mounted on the inner lower surface of the recess and the sensor unit sits on the spring element.

3. The system according to claim 1, wherein the preload mechanism is a preload element made of an elastic material which is compressible, in particular the preload element can be compressed in the vertical direction in a range of 0.5mm to 2 mm.

4. The clamping system according to claim 3, wherein the preload element is an elastomer and positioned on the lower inner surface of the recess and the sensor unit sits on the preload element, in particular the preload element is an O-ring.

5. The clamping system according to claim 1, wherein the preload mechanism includes a fluid channel communicatively connected to the recess and the preload mechanism is configured to supply the pressurized fluid into the recess to push the sensor unit pneumatically or hydraulically towards the pallet contact surface until the sensor unit gets into contact with the pallet contacting surface when the pallet is clamped to the chuck.

6. The clamping system according to claim 5, wherein a fluid inlet is arranged in the chuck and connected to the fluid channel of the pallet for receiving the fluid from outside of the chuck.

7. The clamping system according to claim 6, wherein a sealing ring is arranged on the inner side surface of the recess and surrounds the sensor unit.

8. The clamping system according to claim 1, wherein the preload mechanism comprises a magnetic element.

9. The clamping system according to claim 8, wherein a permanent magnet is mounted on the top of the sensor unit and a metal element is arranged on the pallet contacting surface, wherein the permanent magnet is coupled with the metal element when the pallet is clamped with the chuck.

10. The clamping system according to claim 8, wherein a permanent magnet is mounted on the pallet contacting surface and a metal element is mounted on the top of the sensor unit, wherein the permanent magnet is coupled with the metal element when the pallet is clamped with the chuck.

11. The system according to one of claims 1 to 10, wherein the preload mechanism is positioned symmetrically along the central axial axis of the chuck.

12. The system according to one of claims 1 to 10, wherein the preload mechanism is positioned asymmetrically along the central axial axis of the chuck.

13. The system according to one of claims 1 to 12, wherein at least two preload mechanisms are provided and on each preload mechanism a sensor unit is mounted.

14. The system according to one of claims 1 to 13, wherein a plurality of recesses is formed in the chuck and in each recess a preload mechanism and a sensor unit are provided.

15. Application of the clamping system according to one of claims 1 to 14, wherein the sensor data are collected during the machining and transmitted to a processing unit and the obtained sensor data are analysed by the processing unit to determine the machining quality.
